# EUROPEAN PATENT SPECIFICATION

(11) **EP 4 395 059 B1**
(45) Date of publication and mention of the grant of the patent: **11.11.2026**
(21) Application number: 22904612.3
(22) Date of filing: 06.12.2022
(51) Int. Cl.: H01M 50/595, H01M 50/586, H01M 50/533, H01M 50/178, H01M 10/052, H01M 50/184, H01M 50/186, H01M 10/058, H01M 50/531

(54) **BATTERY CELL WITH CHAMFERED PROTECTIVE TAPE**
BATTERIEZELLE MIT ABGESCHRÄGTEM SCHUTZBAND
ÉLÉMENT DE DE BATTERIE AVEC BANDE DE PROTECTION CHANFREINÉE

(30) Priority: 07.12.2021 KR 20210173785
(43) Date of publication of application: 03.07.2024
(73) Proprietor: LG Energy Solution, Ltd., Seoul 07335 (KR)
(72) Inventor: LI, Dai Hien, Daejeon 34122 (KR); MOON, Tae Young, Daejeon 34122 (KR); LEE, Won Jong, Daejeon 34122 (KR); KIM, Tae Hyun, Daejeon 34122 (KR); JUNG, Hyun Chul, Daejeon 34122 (KR); KIM, Hoyoung, Daejeon 34122 (KR)
(74) Representative: Plasseraud IP
(86) International application number: PCT/KR2022/019689
(87) International publication number: WO 2023/106782

(56) References cited:
- EP-A1- 3 806 180
- CN-U- 208 433 424
- KR-A- 20180 092 592
- KR-B1- 101 261 243
- KR-B1- 101 586 530
- KR-B1- 102 257 083
- US-A1- 2003 228 515
- US-A1- 2003 228 515
- US-A1- 2009 317 701
- US-A1- 2015 333 360

## Description

### [TECHNICAL FIELD]

### Cross Citation with Related Application(s)

This application claims the benefit of Korean Patent Application No. 10-2021-0173785 filed on December 7, 2021 with the Korean Intellectual Property Office.

The present disclosure relates to a battery cell with chamfered protective tape.

### [BACKGROUND]

With the technology development and increased demand for mobile devices, demand for secondary batteries as energy sources has been rapidly increasing. Among such secondary batteries is a lithium secondary battery exhibiting a high energy density and operating voltage, a long cycle lifespan, and a low self-discharge rate, which is now commercialized and widely used.

Moreover, in recent years, the design itself of electronic devices has played a very important role in product selection by consumers, and the electronic devices have been gradually miniaturized and thinned according to the taste of consumer. Thereby, in order to minimize unnecessary waste of internal space of electronic devices, lithium secondary batteries are also required to be miniaturized and thinned, and the demand for them is increasing.

Such a lithium secondary battery is manufactured by fabricating a cathode and an anode, stacking them together with a separator to form an electrode assembly, and incorporating the electrode assembly together with an electrolyte solution in a secondary battery case.

Meanwhile, at this time, a process of attaching a protective tape to the jointing portion between a tab and a lead of the electrode assembly and v-forming the tab is performed. However, such a protective tape is generally attached only to the anode portion, which causes a pressure deviation between the cathode and the anode according to the pressing process of the manufactured electrode assembly, resulting in non-uniform adhesive property. Such non-uniform adhesive property ultimately causes a problem of variations in internal resistance due to cycles of the secondary battery.

Therefore, there is an urgent need to develop a secondary battery technology that can solve these problems.

An example of an electrochemical element comprising a plastic film for covering output conductor lugs and collectors can be found in US 2003/228515 A1. An example of a laminated battery packaging structure can be found in CN 208433424 U. An example of an electronic device with a secondary battery comprising a protective material can be found in US 2015/333360 A1. An example of a battery cell containing a protective tape can be found in KR 101261243 B1.

### [DETAILED DESCRIPTION OF THE INVENTION]

### [Technical Problem]

It is an object of the present disclosure to provide a battery cell that can reduce pressure deviation in the longitudinal direction occurring at the top area of an electrode assembly where a cathode tab and an anode tab are formed, and reduce internal resistance deviation due to non-uniform pressure, thereby improving cell performance.

It is another object of the present disclosure to provide a battery cell that can solve the process problem at the edge of the protective tape that may occur in this process, and thus solve the problem of deterioration in sealing property that the protective tap subsequently causes interference with the battery case.

It may be yet another object of the present disclosure to provide a method that can very easily manufacture the protective tape used for such a battery cell.

### [Technical Solution]

The invention is defined in the appended claims.

According to one embodiment of the present disclosure, there is provided a battery cell for a secondary battery according to claim 1.

Here, the protective tape may be made of casted polypropylene (CPP).

The protective tape may be chamfered in a curved, diagonal or rectangular shape.

At this time, the chamfering may be performed within a portion where the cathode tab and the anode tab are formed from the opposite ends of the protective tape.

A thickness of the protective tape may be 10 *µ*m to 100 *µ*m.

A length of the protective tape may be a length that can cover the top area of the electrode assembly adjacent to the cathode tab and the anode tab.

The cathode tab and the anode tab may be jointed to a cathode lead and an anode lead, respectively, and the cathode lead and the anode lead may be jointed to a first bent portion of the cathode tab and a second bent portion of the anode tab.

Further, the cathode lead and the anode lead may protrude toward the outside of the battery case, and an insulating tape may be formed at a portion where the cathode lead and the anode lead come into contact with the battery case.

At this time, the insulating tape may be made of one or more materials selected from the group consisting of polyphenyleneether (PPE), polyimide (PI), polypropylene (PP), polyethyleneterephthalate (PET), polyphenylene sulfide (PPS), and polyethylene (PE).

Meanwhile, the battery cell may be a lithium secondary battery.

According to another example embodiment, there may be provided a method of manufacturing a protective tape for a secondary battery.

### [BRIEF DESCRIPTION OF THE DRAWINGS]

Fig. 1 shows a planar transmission before v-formation of a tab of a battery cell according to one embodiment of the present disclosure;
Fig. 2 shows a planar transmission after v-formation of a tab in the battery cell of Fig. 1;
Fig. 3 is a cross-sectional view of the battery cell of Fig. 1;
Fig. 4 is schematic views of the protective tape used in Fig. 1.

### [DETAILED DESCRIPTION OF THE EMBODIMENTS]

The terms and words used in the present specification and claims should not be interpreted as being limited to typical meanings or dictionary definitions, but should be interpreted as having meanings and concepts relevant to the technical scope of the present disclosure based on the rule according to which an inventor can appropriately define the terms and words as terms for describing most appropriately the best method the inventor knows for carrying out the invention. Accordingly, the embodiments described herein and the configurations shown in the drawings are only most preferable embodiments of the present disclosure, and the scope of the present disclosure is not limited to the embodiments described below.

Hereinafter, the present disclosure will be described in detail with reference to the accompanying drawings. The terms or words used in the present specification and claims should not be construed as being limited to typical meanings or dictionary definitions, and the present disclosure should be construed with meanings and concepts that are consistent with the technical idea of the present disclosure based on the principle that the inventors may appropriately define concepts of the terms to appropriately describe their own disclosure in the best way.

According to one embodiment of the present disclosure, there is provided a battery cell for a secondary battery in which an electrode assembly including a cathode, an anode, and a separator interposed between the cathode and the anode is incorporated in a battery case,
wherein the cathode has a cathode tab extending from a cathode current collector formed on one side, and the anode has an anode tab extending from an anode current collector formed on one side,
wherein at the top area of the electrode assembly where the cathode tab and the anode tab protrude, the cathode tab and the anode tab each have a first bent portion and a second bent portion that are bent in a v shape,
wherein a protective tape is attached to the first bent portion, the second bent portion, and top areas of the electrode assembly adjacent to the first and second bent portions so as to cover them, and
wherein upper parts at both ends of the protective tape are chamfered.

At this time, the material constituting the protective tape is not limited as long as it is an organic material having insulation and adhesive property, but specifically, it may be casted polypropylene (CPP).

The casted polypropylene has low reactivity with internal materials such as an electrolyte solution and is a material equal to PP used inside the battery case for sealing. Therefore, even if it overlaps the sealing area, it is possible to prevent a phenomenon of rapid deterioration of the sealing property, so it is suitable for use of such a protective tape.

Meanwhile, the protective tape may have a structure in which upper parts at both ends are chamfered.

As described above, when an electrode assembly is mounted in a battery case made of a laminate sheet in a typical pouch-type battery cell, electrode tabs are V-formed and connected to electrode leads to increase a space efficiency of the upper portion. During this process, since a short circuit may occur from the electrode constituting the outermost part due to impacts or drops, and the like, a device capable of protecting them is required.

Thereby, conventionally, a protective tape was attached, but it was manufactured so that the anode was mainly located at the outermost part, so that the protective tape was attached only to the v-forming portion of the anode tab and a part of the top area of the electrode assembly connected thereto.

However, when attached in this way, there was a problem that internal resistance deviation occurs due to non-uniform pressure in the longitudinal direction generated at the top area of the electrode assembly where the cathode tab and the anode tab are formed, thereby deteriorating cell performance.

In this regard, the present inventors have confirmed that a protective tape is entirely attached to the upper and lower portions of the electrode assembly so as to cover the top areas of the electrode assembly adjacent to the first bent portion of the cathode tab and the second bent portion of the anode tab, thereby capable of solving the resistance deviation problem.

However, when attaching the protective tape, there is a problem that the top area of the protective tape is not properly folded during the v-folding process of the tap, and unfolded, which causes interference with the sealing area, resulting in a sealing problem.

Therefore, the present inventors have conducted in-depth research to solve these problems, and as a result, have found that when attaching the protective tape having a structure where the upper parts at both ends are chamfered, it can reduce the problem of deterioration of sealing property that the protective tape subsequently causes interference with the battery case, and completed the present disclosure.

In order to obtain such an effect most effectively, it is preferable that the protective tape is not folded the best during the v-formation of the tab, and thus is not formed in a portion where sealing interference easily occurs, and has a structure that can protect the tabs as a whole, whereby it may be the shape where the upper portions at both ends are chamfered.

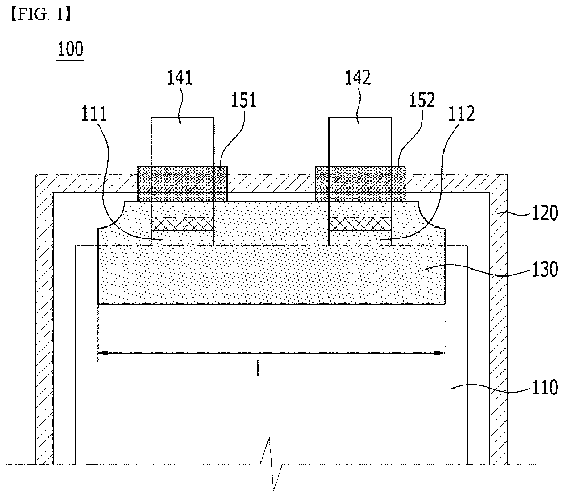

This configuration is shown in Figs. 1 to 4 below, and will be described in more detail with reference to the figures below.

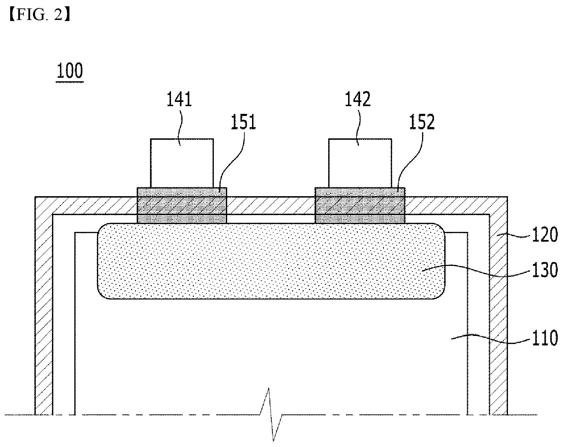

First, Fig. 1 shows a planar transmission before v-formation of a tab of a battery cell according to one embodiment of the present disclosure, and Fig. 2 shows planar transmission after v-formation of a tab in the battery cell of Fig. 1.

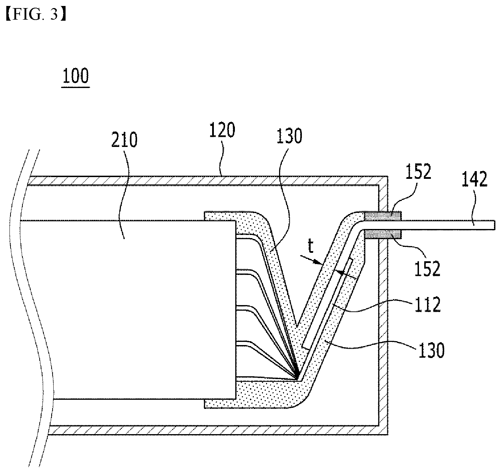

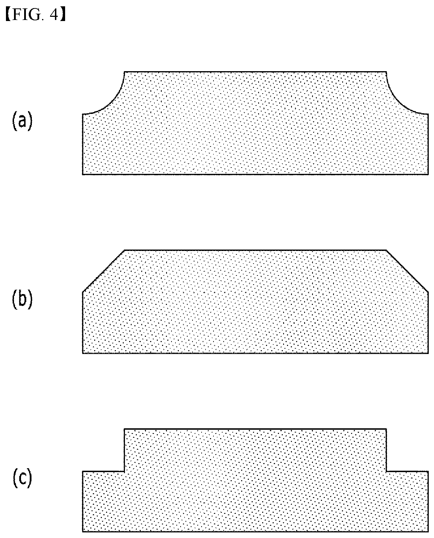

In addition, in order to more specifically describe the bent portion where the v-formation is performed, Fig. 3 shows a cross-sectional view of the battery cell of Fig. 1, and Fig. 4 shows schematic views of the protective tape used in Fig. 1 for explaining the shape of the protective tape in more detail.

Referring to Figs. 1 to 4, the battery cell 100 is configured such that the electrode assembly 110 is incorporated in the battery case 120, the cathode tab 111 and the anode tab 112 protrude side by side from the cathode current collector and the anode current collector of the electrode assembly 110 so as not to overlap each other, and the cathode tab 111 and the anode tab 112 are jointed to the cathode lead 141 and the anode lead 142, respectively.

Here, the cathode tab 111 and the anode tab 112 each have a first bent portion and a second bent portion that are bent into a v shape by a v-forming process as shown in Fig. 3.

In these bent portions, the cathode lead 141 and the anode lead 142 are jointed to the cathode tab 111 and the anode tab 112, respectively, and the cathode lead 141 and anode lead 142 each protrude toward the outside of the battery case 120, and an insulating tapes 151 and 152 are formed at portions in contact with the battery case 120.

The insulating tape is not limited as long as it is a material capable of enhancing adhesion to the battery case and improving sealing properties. For example, the insulating tape may be made of one or more materials selected from the group consisting of polyphenyleneether (PPE), polyimide (PI), polypropylene (PP), polyethyleneterephthalate (PET), polyphenylene sulfide (PPS), and polyethylene (PE).

Meanwhile, the battery cell 100 according to one embodiment of the present disclosure is configured such that at the first bent portion and the second bent portion in the region where bending is performed according to the v-formation of these tabs, and at the top area of the electrode assembly 110 adjacent to the first bent portion and the second bent portion, a protective tape 130 is attached to the upper and lower portions to cover them.

Referring to Figs. 1 and 4 together, the protective tape 130 has a structure in which upper portions at both ends are chamfered.

At this time, the protection tape 130 may have a structure in which upper portions at both ends are chamfered in a curved shape as shown in Fig. 4(a), in a diagonal shape as shown in Fig. 4(b), or in a rectangular shape as in shown Fig. 4(c).

In addition, as can be seen in Fig. 1, such chamfering is performed from both ends of the protective tape 130 within the portion where the cathode tab 111 and the anode tab 112 are formed, so that the cathode tab 111 and the anode tab 112 are entirely covered by the protective tape 130, whereby the chamfer does not affect the cathode tab 111 and the anode tab 112, the tabs 111 and 112 are formed to be entirely protected by the protective tape 130. Thus, the protective tape 130 has a structure capable of sufficiently performing the role of short circuit protection together with the improvement of sealing interference.

This chamfered protective tape 130 can be formed by a very simple method, and specifically, it can be manufactured by cutting a long bar-shaped protective tape reel with a Y-shaped punch at intervals corresponding to the width of the electrode assembly. Accordingly, the present disclosure also provides a method for manufacturing such a protective tape.

Meanwhile, although not shown in the figures, the cathode and the anode each have a flat portion where the active material layer has a constant thickness and an inclined portion where the thickness of the active material layer in the flat portion gradually decreases, and the inclined portion is formed at an end in a direction in which the cathode tab 111 and the anode tab 112 protrude. At this time, the top area of the electrode assembly 110 where the protective tape 130 is formed may be a portion corresponding to the inclined portion of these electrodes.

In this case, a separate protective tape 130 is formed on the top area of the electrode assembly 110 corresponding to the inclined portion of the electrode, whereby when a lamination process or the like is subsequently performed, the protective tape 130 may cover the thickness difference between the flat portion and the inclined portion, and thus, a portion corresponding to the inclined portion of the electrode can also receive the same pressure, which is thus preferable.

Meanwhile, conventionally, the protective tape is formed only on one side of the anode tab. Thus, in order to reduce the pressure difference between the top area of the electrode assembly adjacent to the positive tab and the top area of the electrode assembly adjacent to the anode tab, the length of the protective tape 130 according to the present disclosure is formed to a length l that can cover the upper portion of the electrode assembly 110 adjacent to the cathode electrode tab 111 and the anode tab 112.

Therefore, according to the present disclosure, the pressure deviation in the longitudinal direction of the top area of the electrode assembly is reduced, whereby the internal resistance deviation is also reduced, so that further improved cell performance can be obtained.

Furthermore, the thickness (t) of the protective tape 130 may be 10 *µ*m to 100 *µ*m, specifically 20 *µ*m to 50 *µ*m, within a range that does not increase the volume of the battery cell 100.

If the thickness is too thin outside the above range, the effect of the protective tape cannot be exhibited, and if the thickness is too thick, it may increase the volume of the battery cell, which is thus not preferable.

Other components other than the protective tape, specific manufacturing methods of cathodes, anodes, separators, battery cases, and the like, and constituent materials are well known in the art, and therefore, descriptions thereof are omitted herein.

Meanwhile, the battery cell according to the present disclosure may be specifically a lithium secondary battery.

Other components of the lithium secondary battery are well known in the art, and therefore, descriptions thereof are omitted herein.

### [Industrial Applicability]

The battery cell according to the present disclosure is configured such that the protective tape is formed in a shape of covering both the bent portions of the cathode tab and the anode tab, so that the pressure deviation in the longitudinal direction generated at the top area of the electrode assembly where the cathode tab and the anode tab are formed can be reduced, and the internal resistance deviation due to non-uniform pressure can be reduced, thereby improving cell performance.

In addition, the upper portions at both ends are chamfered so that the protective tape can be easily folded by v-formation, so that it is possible to solve the problem of deterioration of sealing properties that the protective tape causes interference with the battery case, thereby improving safety and cell performance.

Furthermore, it is effective in manufacturing such a protective tape by a very simple method.

## Claims

1. A battery cell (100) for a secondary battery in which an electrode assembly (110) including a cathode, an anode, and a separator interposed between the cathode and the anode is incorporated in a battery case (120),
wherein the cathode has a cathode tab (111) extending from a cathode current collector formed on one side, and the anode has an anode tab (112) extending from an anode current collector formed on one side,
wherein at the top area of the electrode assembly (110) where the cathode tab (111) and the anode tab (112) protrude, the cathode tab (111) and the anode tab (112) each have a first bent portion and a second bent portion that are bent in a v shape,
**characterized in that** a protective tape (130) is attached to the first bent portion, the second bent portion, and top areas of the electrode assembly (110) adjacent to the first and second bent portions so as to cover them,
the cathode and the anode each have a flat portion where an active material layer has a constant thickness, and an inclined portion where the thickness of the active material layer in the flat portion gradually decreases,
the inclined portion is formed at an end in a direction in which the cathode tab (111) of the cathode and the anode tab (112) of the anode protrude,
the top area of the electrode assembly (110) where the protective tape (130) is formed is a portion corresponding to the inclined portion, and
wherein upper parts at both ends of the protective tape (130) are chamfered.

2. The battery cell (100) according to claim 1, wherein:
the protective tape (130) is made of casted polypropylene (CPP).

3. The battery cell (100) according to claim 1, wherein:
the protective tape (130) is chamfered in a curved, diagonal or rectangular shape.

4. The battery cell (100) according to claim 1, wherein:
the chamfering is performed within a portion where the cathode tab (111) and the anode tab (112) are formed from the opposite ends of the protective tape (130).

5. The battery cell (100) according to claim 1, wherein:
a thickness (t) of the protective tape (130) is 10 *µ*m to 100 *µ*m.

6. The battery cell (100) according to claim 1, wherein:
a length (1) of the protective tape (130) is a length that can cover the top area of the electrode assembly (110) adjacent to the cathode tab (111) and the anode tab (112).

7. The battery cell (100) according to claim 1, wherein:
the cathode tab (111) and the anode tab (112) are jointed to a cathode lead (141) and an anode lead (142), respectively, and the cathode lead (141) and the anode lead (142) are jointed to a first bent portion of the cathode tab (111) and a second bent portion of the anode tab (112).

8. The battery cell (100) according to claim 1, wherein:
the cathode lead (141) and the anode lead (142) protrude toward the outside of the battery case (120), and an insulating tape (151, 152) is formed at a portion where the cathode lead (141) and the anode lead (142) come into contact with the battery case (120).

9. The battery cell (100) according to claim 8, wherein:
the insulating tape (151, 152) is made of one or more materials selected from the group consisting of polyphenyleneether (PPE), polyimide (PI), polypropylene (PP), polyethyleneterephthalate (PET), polyphenylene sulfide (PPS), and polyethylene (PE).

10. The battery cell (100) according to claim 1, wherein:
the battery cell (100) is a lithium secondary battery.

## Patentansprüche

1. Batteriezelle (100) für eine Sekundärbatterie, bei der eine Elektrodenbaugruppe (110), die eine Kathode, eine Anode und einen zwischen der Kathode und der Anode angeordneten Separator enthält, in ein Batteriegehäuse (120) eingebaut ist,
• wobei die Kathode eine Kathodenlasche (111) aufweist, die sich von einem auf einer Seite ausgebildeten Kathoden-Stromkollektor erstreckt, und die Anode eine Anodenlasche (112) aufweist, die sich von einem auf einer Seite ausgebildeten Anoden-Stromkollektor erstreckt,
• wobei in dem oberen Bereich der Elektrodenbaugruppe (110), von dem die Kathodenlasche (111) und die Anodenlasche (112) hervorstehen, die Kathodenlasche (111) und die Anodenlasche (112) jeweils einen ersten gebogenen Abschnitt und einen zweiten gebogenen Abschnitt aufweisen, die in einer V-Form gebogen sind,
• **dadurch gekennzeichnet, dass** ein Schutzband (130) an dem ersten gebogenen Abschnitt, dem zweiten gebogenen Abschnitt und oberen Bereichen der Elektrodenbaugruppe (110) angrenzend an den ersten und den zweiten gebogenen Abschnitt angebracht ist, um diese abzudecken,
• die Kathode und die Anode jeweils einen flachen Abschnitt, in dem eine Aktivmaterialschicht eine konstante Dicke aufweist, und einen geneigten Abschnitt aufweisen, in dem die Dicke der Aktivmaterialschicht in dem flachen Abschnitt allmählich abnimmt,
• der geneigte Abschnitt an einem Ende in einer Richtung ausgebildet ist, in der die Kathodenlasche (111) der Kathode und die Anodenlasche (112) der Anode hervorstehen,
• der obere Bereich der Elektrodenbaugruppe (110), in dem das Schutzband (130) ausgebildet ist, ein Abschnitt ist, der dem geneigten Abschnitt entspricht, und
• wobei obere Teile an beiden Enden des Schutzbands (130) abgeschrägt sind.

2. Batteriezelle (100) nach Anspruch 1, wobei:
das Schutzband (130) aus gegossenem Polypropylen (CPP) hergestellt ist.

3. Batteriezelle (100) nach Anspruch 1, wobei:
das Schutzband (130) in einer gekrümmten, diagonalen oder rechteckigen Form abgeschrägt ist.

4. Batteriezelle (100) nach Anspruch 1, wobei:
das Abschrägen innerhalb eines Abschnitts durchgeführt wird, in dem die Kathodenlasche (111) und die Anodenlasche (112) von den entgegengesetzten Enden des Schutzbands (130) aus ausgebildet sind.

5. Batteriezelle (100) nach Anspruch 1, wobei:
eine Dicke (t) des Schutzbands (130) 10 µm bis 100 µm beträgt.

6. Batteriezelle (100) nach Anspruch 1, wobei:
eine Länge (l) des Schutzbands (130) eine Länge ist, die den oberen Bereich der Elektrodenbaugruppe (110) angrenzend an die Kathodenlasche (111) und die Anodenlasche (112) abdecken kann.

7. Batteriezelle (100) nach Anspruch 1, wobei:
die Kathodenlasche (111) und die Anodenlasche (112) jeweils mit einem Kathodenableiter (141) und einem Anodenableiter (142) verbunden sind, und der Kathodenableiter (141) und der Anodenableiter (142) mit einem ersten gebogenen Abschnitt der Kathodenlasche (111) und einem zweiten gebogenen Abschnitt der Anodenlasche (112) verbunden sind.

8. Batteriezelle (100) nach Anspruch 1, wobei:
der Kathodenableiter (141) und der Anodenableiter (142) zur Außenseite des Batteriegehäuses (120) hin hervorstehen, und ein Isolierband (151, 152) an einem Abschnitt ausgebildet ist, an dem der Kathodenableiter (141) und der Anodenableiter (142) mit dem Batteriegehäuse (120) in Kontakt kommen.

9. Batteriezelle (100) nach Anspruch 8, wobei:
das Isolierband (151, 152) aus einem oder mehreren Materialien hergestellt ist, die aus der Gruppe ausgewählt sind, die aus Polyphenylenether (PPE), Polyimid (PI), Polypropylen (PP), Polyethylenterephthalat (PET), Polyphenylensulfid (PPS) und Polyethylen (PE) besteht.

10. Batteriezelle (100) nach Anspruch 1, wobei:
die Batteriezelle (100) eine Lithium-Sekundärbatterie ist.

## Revendications

1. Cellule de batterie (100) pour une batterie secondaire dans lequel un ensemble d'électrodes (110) comprenant une cathode, une anode et un séparateur interposé entre la cathode et l'anode est incorporé dans un boîtier de batterie (120),
dans lequel la cathode comporte une languette de cathode (111) s'étendant à partir d'un collecteur de courant de cathode formé sur un côté, et l'anode comporte une languette d'anode (112) s'étendant à partir d'un collecteur de courant d'anode formé sur un côté,
dans lequel, au niveau de la zone supérieure de l'ensemble d'électrodes (110) où la languette de cathode (111) et la languette d'anode (112) font saillie, la languette de cathode (111) et la languette d'anode (112) ont chacune une première partie pliée et une seconde partie pliée qui sont pliées en forme de V,
**caractérisé en ce qu'**un ruban protecteur (130) est fixé à la première partie pliée, à la seconde partie pliée et aux zones supérieures de l'ensemble d'électrodes (110) adjacentes aux première et seconde parties pliées de manière à les recouvrir,
la cathode et l'anode possèdent chacune une partie plate où une couche de matériau actif présente une épaisseur constante, et une partie inclinée où l'épaisseur de la couche de matériau actif dans la partie plate diminue progressivement,
la partie inclinée est formée à une extrémité dans une direction dans laquelle la languette de cathode (111) de la cathode et la languette d'anode (112) de l'anode font saillie,
la zone supérieure de l'ensemble d'électrodes (110) où le ruban protecteur (130) est formé est une partie correspondant à la partie inclinée, et
dans lequel des parties supérieures aux deux extrémités du ruban protecteur (130) sont chanfreinées.

2. Cellule de batterie (100) selon la revendication 1, dans lequel :
le ruban protecteur (130) est constitué de polypropylène coulé (CPP).

3. Cellule de batterie (100) selon la revendication 1, dans lequel :
le ruban protecteur (130) est chanfreiné en une forme courbe, diagonale ou rectangulaire.

4. Cellule de batterie (100) selon la revendication 1, dans lequel :
le chanfreinage est réalisé à l'intérieur d'une partie où la languette de cathode (111) et la languette d'anode (112) sont formées depuis les extrémités opposées du ruban protecteur (130).

5. Cellule de batterie (100) selon la revendication 1, dans lequel :
une épaisseur (t) du ruban protecteur (130) est de 10 µm à 100 µm.

6. Cellule de batterie (100) selon la revendication 1, dans lequel :
une longueur (l) du ruban protecteur (130) est une longueur qui peut recouvrir la zone supérieure de l'ensemble d'électrodes (110) adjacente à la languette de cathode (111) et à la languette d'anode (112).

7. Cellule de batterie (100) selon la revendication 1, dans lequel :
la languette de cathode (111) et la languette d'anode (112) sont raccordées à une borne de cathode (141) et une borne d'anode (142), respectivement, et la borne de cathode (141) et la borne d'anode (142) sont raccordés à une première partie pliée de la languette de cathode (111) et à une seconde partie pliée de la languette d'anode (112).

8. Cellule de batterie (100) selon la revendication 1, dans lequel :
la borne de cathode (141) et la borne d'anode (142) font saillie vers l'extérieur du boîtier de batterie (120), et un ruban isolant (151, 152) est formé au niveau d'une partie où la borne de cathode (141) et la borne d'anode (142) entrent en contact avec le boîtier de batterie (120).

9. Cellule de batterie (100) selon la revendication 8, dans lequel :
le ruban isolant (151, 152) est constitué d'un ou plusieurs matériaux choisis dans le groupe constitué par le polyphénylène éther (PPE), le polyimide (PI), le polypropylène (PP), le polyéthylène téréphtalate (PET), le sulfure de polyphénylène (PPS) et le polyéthylène (PE).

10. Cellule de batterie (100) selon la revendication 1, dans lequel :
La cellule de batterie (100) est une batterie secondaire au lithium.
